# FASCICULE DE BREVET EUROPEEN

(11) **EP 3 907 207 B1**
(45) Date de publication et mention de la délivrance du brevet: **22.05.2024**
(21) Numéro de dépôt: 21183043.5
(22) Date de dépôt: 18.10.2018
(51) Int. Cl.: C04B 35/80, C04B 35/83, C01B 32/05

(54) **PROCEDE DE FARICATION DE PYROCARBONE DE MICROSTRUCTURE PREDETERMINEE**
VERFAHREN ZUR HERSTELLUNG VON PYROKOHLENSTOFF MIT EINER VORBESTIMMTEN MIKROSTRUKTUR
METHOD FOR MANUFACTURING PYROCARBON WITH A PREDETERMINED MICROSTRUCTURE

(30) Priorité: 19.10.2017 FR 1759870
(43) Date de publication de la demande: 10.11.2021
(62) Demande divisionnaire de: 18800703.3
(73) Titulaire: Safran Ceramics, 33185 Le Haillan (FR); Centre National de la Recherche Scientifique, 75016 Paris (FR); Commissariat à l'énergie atomique et aux énergies alternatives, 75015 Paris (FR)
(72) Inventeur: DELEHOUZE, Arnaud, 77550 MOISSY-CRAMAYEL (FR); LORRIAUX, Amandine, 33000 BORDEAUX (FR); MAILLE, Laurence, 33000 BORDEAUX (FR); DAVID, Patrick, 75014 PARIS (FR)
(74) Mandataire: Cabinet Beau de Loménie

(56) Documents cités:
- DATABASE COMPENDEX [Online] ENGINEERING INFORMATION, INC., NEW YORK, NY, US; février 2011 (2011-02), LIU Z-C ET AL: "Microstructures and mechanical behavior of C/C composites prepared by ICVI using n-propanol as precursor", XP002787693, Database accession no. E20111313874524 & LIU Z-C ET AL: "Microstructures and mechanical behavior of C/C composites prepared by ICVI using n-propanol as precursor", WUJI CAILIAO XUEBAO/JOURNAL OF INORGANIC MATERIALS FEBRUARY 2011 SCIENCE PRESS CHN, vol. 26, no. 2, février 2011 (2011-02), pages 191-196, DOI: 10.3724/SP.J.1077.2011.00191
- Regiani I ET AL: "Differences in Pyrocarbon Matrices Made by Fb-Cvi with Organic Precursors : A Collection of Papers Presented at the 38th International Conference on Advanced Ceramics and Composites January 27-31, 2014 Daytona Beach, Florida" In: "Developments in Strategic Materials and Computational Design V : A Collection of Papers Presented at the 38th International Conference on Advanced Ceramics and Composites January 27-31, 2014 Daytona Beach, Florida", 19 décembre 2014 (2014-12-19), John Wiley & Sons, Inc., Hoboken, NJ, USA, XP055481172, ISBN: 978-1-119-04028-6 vol. CEP, pages 237-244, DOI: 10.1002/9781119040293.ch21, * abrégé * * page 242 *

## Description

### Arrière-plan de l'invention

Il est connu d'utiliser la technique de caléfaction pour former du pyrocarbone à partir d'un précurseur hydrocarbure comme le cyclohexane.

On peut, en particulier, déposer un revêtement de pyrocarbone sur la surface externe d'un substrat par caléfaction en immergeant ledit substrat dans un bain de cyclohexane à l'état liquide, et en réalisant un chauffage de ce substrat à une température supérieure à la température de décomposition du précurseur.

Le liquide, au contact des surfaces chaudes, se vaporise et forme un film gazeux appelé « film de caléfaction ». Le substrat étant chauffé au-dessus de la température de décomposition du précurseur, les vapeurs contenues dans le film de caléfaction se décomposent et un dépôt se forme par réactions hétérogènes entre la surface du substrat et la phase gazeuse.

Toutefois, il est relativement difficile de contrôler la microstructure du pyrocarbone formé et d'obtenir une microstructure homogène lorsque les techniques de caléfaction connues sont utilisées. Plus particulièrement, l'obtention contrôlée de pyrocarbone de type laminaire rugueux peut s'avérer relativement difficile. En outre, le pyrocarbone obtenu par caléfaction dans l'art antérieur peut présenter des défauts structuraux, comme des fissures, dont il serait souhaitable de réduire le degré de présence.

Par ailleurs, un autre problème est que les précurseurs de caléfaction connus sont généralement issus de ressources non renouvelables (filière pétrolière par exemple). Cela peut conduire, à terme, à des problèmes de disponibilité de ces composés et à un impact négatif sur le plan environnemental.

On connaît la publication Liu Z-C et al. « Microstructures and mechanical behavior of C/C composites prepared by ICVI using n-propanol as precursor », Wuji Cailiao Xuebao / Journal of Inorganic Materials, février 2011, vol. 26, no. 2, février 2011, pages 191-196 qui divulgue la formation de pyrocarbone par CVI isotherme.

### Objet et résumé de l'invention

L'invention vise à résoudre les inconvénients précités et concerne un procédé de fabrication de pyrocarbone selon la revendication 1.

Par « alcool », il faut comprendre un composé ayant une seule fonction alcool. Par « polyalcool », il faut comprendre un composé ayant plusieurs fonctions alcool.

La mise en oeuvre d'un précurseur alcool ou polyalcool en C₂ à C₆ permet d'obtenir un pyrocarbone ayant une microstructure homogène et contrôlée, et présentant une quantité de défauts structuraux réduite par rapport aux techniques de l'art antérieur. Plus précisément, ce précurseur permet d'obtenir sélectivement un pyrocarbone ayant une microstructure prédéterminée suivant la température imposée durant la caléfaction. Le fait d'utiliser le précurseur décrit plus haut permet de moduler la microstructure obtenue pour le pyrocarbone formé sur la surface traitée en faisant varier la température à laquelle cette surface est chauffée lors de la caléfaction.

En outre, l'alcool ou le polyalcool envisagé ici constitue un composé disponible en grande quantité et qui peut être obtenu à partir de ressources renouvelables, conférant ainsi aux précurseurs décrits plus haut une disponibilité accrue par rapport aux précurseurs connus.

Dans un exemple de réalisation, le précurseur est un alcool ou un polyalcool aliphatique.

Le précurseur est un alcool ou un polyalcool en C₃.

La mise en oeuvre d'un précurseur en C₃ est avantageuse car elle permet, en faisant varier la température imposée lors de la caléfaction, d'accéder à l'intégralité des microstructures existantes pour le pyrocarbone, et donc notamment d'obtenir de manière contrôlée du pyrocarbone de type laminaire rugueux. Le précurseur peut être le propanol.

Le pyrocarbone formé à partir du précurseur décrit plus haut peut être destiné à diverses applications.

Ainsi, l'invention vise également un procédé de revêtement d'un substrat, comprenant au moins l'étape suivante :
- formation d'un revêtement de pyrocarbone sur une surface d'un substrat par mise en oeuvre d'un procédé tel que décrit plus haut.

En variante, l'invention vise encore un procédé de densification d'une préforme fibreuse, comprenant au moins l'étape suivante :
- formation d'une matrice de pyrocarbone dans la porosité de la préforme fibreuse par mise en oeuvre d'un procédé tel que décrit plus haut.

### Brève description des dessins

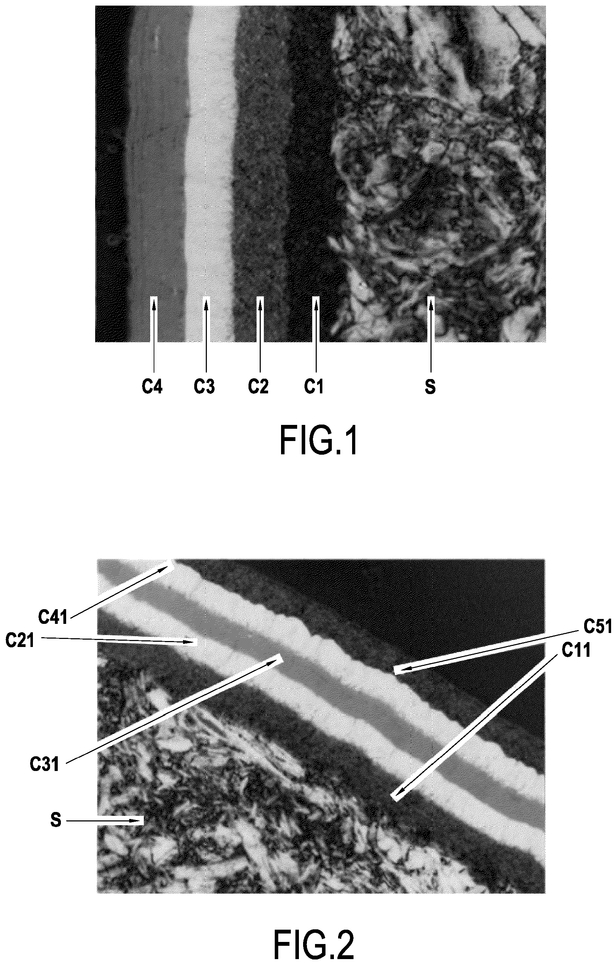

D'autres caractéristiques et avantages de l'invention ressortiront de la description suivante, donnée à titre non limitatif, en référence aux figures 1 et 2 annexées qui sont des observations au microscope optique à lumière polarisée d'une pluralité de dépôts de pyrocarbone obtenus dans le cadre d'exemples de procédé hors invention.

### Description détaillée de modes de réalisation

Le pyrocarbone est formé par caléfaction à partir d'un précurseur alcool ou polyalcool en C₃. On peut, en particulier, former une matrice de pyrocarbone dans la porosité d'une préforme fibreuse, ou un revêtement de pyrocarbone sur la surface externe d'un substrat.

Dans ce cas, la préforme fibreuse à densifier ou le substrat à revêtir est immergé dans un bain liquide comprenant le précurseur alcool ou polyalcool. Un chauffage de la préforme ou du substrat est ensuite réalisé, par exemple par induction. Au contact de la préforme ou du substrat chauffé, le précurseur est vaporisé pour former un film de caléfaction au sein duquel il va se décomposer pour former un dépôt de pyrocarbone, formant la matrice ou le revêtement.

L'alcool ou le polyalcool peut présenter une chaîne linéaire, ramifiée ou cyclique. Selon un exemple, le précurseur peut être un alcool ou un polyalcool aliphatique.

Dans un exemple de réalisation, le précurseur est choisi parmi : le propanol, le glycérol, le cyclopropanol, ou un mélange de ces composés.

L'alcool ou le polyalcool est en C₃. En particulier, le précurseur est le propanol.

Durant le procédé de caléfaction, une température prédéterminée est imposée à la préforme ou au substrat afin d'obtenir le pyrocarbone de microstructure souhaitée.

Lorsqu'un précurseur alcool ou polyalcool en C₂-C₆ est utilisé durant la caléfaction, le fait d'imposer une première température permet de sélectivement former un pyrocarbone ayant une première microstructure, et le fait d'imposer une deuxième température, différente de la première, permet de sélectivement former un pyrocarbone ayant une deuxième microstructure, différente de la première. En fonction des applications recherchées pour le pyrocarbone formé, il peut être souhaitable de privilégier une microstructure de pyrocarbone, plutôt qu'une autre.

Lorsque l'éthanol est utilisé en tant que précurseur, ce qui est hors invention:
- du pyrocarbone amorphe est obtenu en imposant une température comprise entre 1050°C et 1150°C durant la caléfaction,
- du pyrocarbone laminaire sombre est obtenu en imposant une température comprise entre 1175°C et 1225°C durant la caléfaction,
- du pyrocarbone laminaire rugueux est obtenu en imposant une température comprise entre 1250°C et 1325°C durant la caléfaction, et
- du pyrocarbone laminaire lisse est obtenu en imposant une température comprise entre 1350°C et 1425°C durant la caléfaction.

On notera que, dans le cas où un précurseur en C₂ est utilisé, il est non seulement possible de moduler la microstructure du pyrocarbone selon la température imposée durant la caléfaction mais aussi d'obtenir, de manière contrôlée, du pyrocarbone laminaire rugueux.

A titre d'exemple, lorsque le propanol est utilisé en tant que précurseur :
- du pyrocarbone amorphe est obtenu en imposant une température comprise entre 1050°C et 1150°C durant la caléfaction,
- du pyrocarbone laminaire sombre est obtenu en imposant une température comprise entre 1175°C et 1220°C durant la caléfaction,
- du pyrocarbone laminaire rugueux est obtenu en imposant une température comprise entre 1220°C et 1250°C, par exemple entre 1230°C et 1250°C, durant la caléfaction, et
- du pyrocarbone laminaire lisse est obtenu en imposant une température comprise entre 1275°C et 1425°C durant la caléfaction.

On notera que, dans le cas où un précurseur en C₃ est utilisé, il est non seulement possible de moduler la microstructure du pyrocarbone selon la température imposée durant la caléfaction mais aussi d'obtenir, de manière contrôlée, du pyrocarbone laminaire rugueux.

Lorsque le butanol est utilisé en tant que précurseur, ce qui est hors invention:
- du pyrocarbone amorphe est obtenu en imposant une température comprise entre 1050°C et 1150°C durant la caléfaction, et
- du pyrocarbone laminaire lisse est obtenu en imposant une température comprise entre 1175°C et 1225°C durant la caléfaction.

Lorsque le pentanol est utilisé en tant que précurseur, ce qui est hors invention:
- du pyrocarbone laminaire sombre est obtenu en imposant une température comprise entre 1050°C et 1225°C durant la caléfaction, et
- du pyrocarbone laminaire lisse est obtenu en imposant une température comprise entre 1275°C et 1425°C durant la caléfaction.

Lorsque l'hexanol est utilisé en tant que précurseur, ce qui est hors invention:
- du pyrocarbone laminaire sombre est obtenu en imposant une température comprise entre 1050°C et 1225°C durant la caléfaction, et
- du pyrocarbone laminaire lisse est obtenu en imposant une température comprise entre 1275°C et 1425°C durant la caléfaction.

Une observation au microscope optique à lumière polarisée d'un résultat d'un exemple d'essai hors l'invention est fournie à la figure 1.

L'essai correspondant à la figure 1 a consisté à déposer successivement par caléfaction quatre couches C1, C2, C3 et C4 de pyrocarbone sur le substrat S.

Il a été utilisé pour former chacune des couches C1-C4 l'éthanol comme précurseur de pyrocarbone. Une température différente a été imposée durant la caléfaction lors de la formation de chacune des couches C1-C4.

Ainsi, la couche C1 a été obtenue en imposant une température durant la caléfaction de 1100°C pendant 49 minutes. La couche C1 était une couche de pyrocarbone amorphe et présentait une épaisseur de 7,32 µm et un angle d'extinction de 1,4° lorsqu'observée en microscopie optique en lumière polarisée.

La couche C2 a été obtenue en imposant une température durant la caléfaction de 1200°C pendant 19 minutes. La couche C2 était une couche de pyrocarbone laminaire sombre et présentait une épaisseur de 8,21 µm et un angle d'extinction de 4,2° lorsqu'observée en microscopie optique en lumière polarisée.

La couche C3 a été obtenue en imposant une température durant la caléfaction de 1300°C pendant 7 minutes. La couche C3 était une couche de pyrocarbone laminaire rugueux et présentait une épaisseur de 7,36 µm et un angle d'extinction de 21,7° lorsqu'observée en microscopie optique en lumière polarisée.

La couche C4 a été obtenue en imposant une température durant la caléfaction de 1400°C pendant 2 minutes et 12 secondes. La couche C4 était une couche de pyrocarbone laminaire lisse et présentait une épaisseur de 9,02 µm et un angle d'extinction de 8,4° lorsqu'observée en microscopie optique en lumière polarisée.

D'autres essais ont été menés en utilisant l'éthanol comme précurseur. L'essai correspondant à la figure 2 a consisté à déposer successivement par caléfaction cinq couches C11, C21, C31, C41 et C51 de pyrocarbone sur le substrat S.

La température imposée durant la caléfaction a été modulée durant le dépôt de ces cinq couches afin de faire varier la microstructure du pyrocarbone obtenu.

Ainsi, les couches C11 et C51 ont été obtenues en imposant une température durant la caléfaction de 1200°C pendant 13 minutes et 39 secondes. Les couches C11 et C51 étaient des couches de pyrocarbone laminaire sombre et présentaient une épaisseur de 5 µm.

Les couches C21 et C41 ont été obtenues en imposant une température durant la caléfaction de 1300°C pendant 5 minutes et 39 secondes. Les couches C21 et C41 étaient des couches de pyrocarbone laminaire rugueux et présentaient une épaisseur de 4,5 µm.

La couche C31 a été obtenue en imposant une température durant la caléfaction de 1400°C pendant 1 minute et 34 secondes. La couche C31 était une couche de pyrocarbone laminaire lisse et présentait une épaisseur de 4 µm.

Des détails relatifs à la préforme fibreuse et au substrat qui peuvent être mis en oeuvre vont, à présent, être décrits.

La préforme fibreuse peut comporter des fils réfractaires, comme des fils céramiques ou carbone, ou un mélange de fils céramiques et de carbone. Les fils céramiques peuvent, par exemple, être choisis parmi les fils de carbure de silicium ou les fils en oxyde réfractaire, par exemple en alumine.

La préforme peut par exemple être formée de fils de carbure de silicium fournis par la société japonaise NGS sous la référence « Nicalon », « Hi-Nicalon » ou encore « Hi-Nicalon Type S ». La préforme peut être formée de fils d'alumine fournis par la société 3M sous la référence Nextel. Les fils de carbone utilisables pour former cette préforme sont, par exemple, fournis sous la dénomination Torayca T300 3K par la société Toray.

La préforme fibreuse est obtenue à partir d'au moins une opération textile. La préforme fibreuse est destinée à constituer le renfort fibreux de la pièce à obtenir. La préforme fibreuse peut, en particulier, être obtenue par tissage multicouches ou multidimensionnel, par exemple tridimensionnel, 3D orthogonal, 3D polaire ou 4D.

Par « tissage tridimensionnel » ou « tissage 3D », il faut comprendre un mode de tissage par lequel certains au moins des fils de chaîne lient des fils de trame sur plusieurs couches de trame. Une inversion des rôles entre chaîne et trame est possible dans le présent texte et doit être considérée comme couverte aussi par les revendications.

La préforme fibreuse peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, la préforme fibreuse peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage multicouches utilisables pour former la préforme fibreuse sont décrits dans le document WO 2006/136755.

Il est aussi possible de former d'abord des textures fibreuses telles que des tissus bidimensionnels ou des nappes unidirectionnelles, et d'obtenir la préforme fibreuse par drapage de telles textures fibreuses sur une forme. Ces textures peuvent éventuellement être liées entre elles par exemple par couture ou implantation de fils pour former la préforme fibreuse.

Les fils formant la préforme fibreuse peuvent ou non être revêtus avant formation de la matrice de pyrocarbone.

En particulier, les fils peuvent être revêtus par une interphase monocouche ou multicouches. Cette interphase peut comporter au moins une couche de carbone pyrolytique (PyC), de nitrure de bore (BN), de nitrure de bore dopé au silicium (BNSi), avec du silicium en une proportion massique comprise entre 5% et 40%, le complément étant du nitrure de bore) ou de carbone dopé au bore (BC, avec 5%at. à 20%at. de B, le complément étant C).

L'interphase a ici une fonction de défragilisation du matériau composite qui favorise la déviation de fissures éventuelles parvenant à l'interphase après s'être propagées dans la matrice, empêchant ou retardant la rupture des fils par de telles fissures.

L'épaisseur de l'interphase peut être comprise entre 10 nm et 1000 nm, et par exemple entre 10 nm et 100 nm. L'interphase peut être formée, de manière connue en soi, par infiltration chimique en phase vapeur sur les fils de la préforme déjà constituée. On pourrait, en variante, former l'interphase par dépôt chimique en phase vapeur sur les fils avant formation de la préforme, puis former cette préforme à partir des fils ainsi revêtus.

On notera que, selon un exemple, la préforme fibreuse peut être partiellement densifiée avant la formation de la matrice de pyrocarbone à partir du précurseur. Cette pré-densification peut être réalisée de manière connue en soi. La préforme fibreuse peut être pré-densifiée par une phase de pré-densification en carbone ou en matériau céramique. Dans ce cas, la porosité résiduelle de la préforme pré-densifiée est, en tout ou partie, comblée par la matrice de pyrocarbone formée à partir du précurseur. En variante, la matrice de la pièce en matériau composite obtenue est intégralement formée par la matrice de pyrocarbone obtenue à partir du précurseur alcool ou polyalcool. Dans ce dernier cas, la préforme fibreuse n'a pas été pré-densifiée.

La matrice formée par un procédé de caléfaction à partir du précurseur alcool ou polyalcool en C₃ peut occuper au moins 50%, voire au moins 75%, de la porosité initiale de la préforme fibreuse. La porosité initiale de la préforme correspond à la porosité présentée par la préforme avant la réalisation d'une quelconque étape de densification.

On ne sort pas du cadre de l'invention lorsqu'un revêtement de pyrocarbone est formé sur la surface externe du substrat. On obtient alors une pièce revêtue, comprenant le substrat et le revêtement de pyrocarbone formé sur ce substrat à partir du précurseur alcool ou polyalcool.

Le substrat revêtu peut être une pièce en matériau composite déjà densifiée, comme un matériau composite à matrice céramique ou un matériau composite à matrice carbone. En variante, le substrat revêtu est un bloc en matériau réfractaire monolithique, céramique ou en carbone.

L'expression « compris(e) entre ... et ... » doit se comprendre comme incluant les bornes.

## Revendications

1. Procédé de fabrication de pyrocarbone, comprenant une étape de formation du pyrocarbone par un procédé de caléfaction à partir d'au moins un précurseur alcool ou polyalcool en C₃.

2. Procédé selon la revendication 1, dans lequel le précurseur est le propanol.

3. Procédé selon la revendication 2, dans lequel du pyrocarbone laminaire rugueux est obtenu en imposant une température comprise entre 1220°C et 1250°C durant la caléfaction.

4. Procédé de revêtement d'un substrat, comprenant au moins l'étape suivante :
- formation d'un revêtement de pyrocarbone sur une surface d'un substrat par mise en oeuvre d'un procédé selon l'une quelconque des revendications 1 à 3.

5. Procédé de densification d'une préforme fibreuse, comprenant au moins l'étape suivante :
- formation d'une matrice de pyrocarbone dans la porosité de la préforme fibreuse par mise en oeuvre d'un procédé selon l'une quelconque des revendications 1 à 3.

## Patentansprüche

1. Verfahren zum Herstellen von Pyrokohlenstoff, umfassend einen Schritt des Bildens des Pyrokohlenstoffs durch ein Erwärmungsverfahren aus mindestens einem Alkohol- oder Polyalkohol-Vorläufer in C₃.

2. Verfahren nach Anspruch 1, wobei der Vorläufer Propylalkohol ist.

3. Verfahren nach Anspruch 2, wobei laminarer rauer Polykohlenstoff durch Einwirken einer Temperatur von zwischen 1220 °C und 1250 °C während der Erwärmung erlangt wird.

4. Verfahren zum Beschichten eines Substrats, umfassend mindestens den folgenden Schritt:
- Bilden einer Beschichtung aus Polykohlenstoff auf einer Oberfläche eines Substrats mittels Durchführen eines Verfahrens nach einem der Ansprüche 1 bis 3.

5. Verfahren zum Verdichten einer faserigen Vorform, umfassend mindestens den folgenden Schritt:
- Bilden einer Matrix aus Pyrokohlenstoff in der Porosität der faserigen Vorform mittels Durchführen eines Verfahrens nach einem der Ansprüche 1 bis 3.

## Claims

1. A process for manufacturing pyrocarbon, comprising a step of forming pyrocarbon by a calefaction process from at least one C₃ alcohol or polyalcohol precursor.

2. The process as claimed in claim 1, wherein the precursor is propanol.

3. The process as claimed in claim 2, wherein rough laminar pyrocarbon is obtained by imposing a temperature between 1220°C and 1250°C during calefaction.

4. A process for coating a substrate, comprising at least the following step:
- forming a pyrocarbon coating on a surface of a substrate by carrying out a process as claimed in any one of claims 1 to 3.

5. A process for densifying a fiber preform, comprising at least the following step:
- forming a pyrocarbon matrix in the porosity of the fiber preform by carrying out a process as claimed in any one of claims 1 to 3.
